# EUROPÄISCHE PATENTSCHRIFT

(11) **EP 3 742 003 B1**
(45) Veröffentlichungstag und Bekanntmachung des Hinweises auf die Patenterteilung: **07.07.2021**
(21) Anmeldenummer: 19175783.0
(22) Anmeldetag: 21.05.2019
(51) Int. Cl.: F16B 2/06, F16B 2/14, F16B 5/06, F16B 5/12, E04F 11/18

(54) **HALTEVORRICHTUNG FÜR EIN FLÄCHENELEMENT**
HOLDER DEVICE FOR A SURFACE ELEMENT
DISPOSITIF DE RETENUE POUR UN ÉLÉMENT DE SURFACE

(43) Veröffentlichungstag der Anmeldung: 25.11.2020
(73) Patentinhaber: Pauli + Sohn GmbH Metallwaren, 51597 Morsbach (DE)
(72) Erfinder: Schneider, Torben, 51597 Morsbach (DE)
(74) Vertreter: Neumann Müller Oberwalleney & Partner Patentanwälte

(56) Entgegenhaltungen:
- EP-A2- 2 921 607
- WO-A1-2015/145477
- WO-A2-2013/121330
- DE-T5-112012 006 052
- GB-A- 2 528 147
- US-A- 4 067 548

## Beschreibung

Die Erfindung betrifft eine Haltevorrichtung für ein Flächenelement einer Brüstung oder eines Geländers mit einer Halteschiene, die sich entlang einer Längsachse erstreckt und einen ersten Halteschenkel, einen zweiten Halteschenkel sowie einen die beiden Halteschenkel miteinander verbindenden Haltesteg aufweist, wobei die beiden Halteschenkel beidseits einer Hochachse von dem Haltesteg abragen und zwischen sich einen Aufnahmeschlitz zur Aufnahme eines Fußabschnitts des Flächenelementes begrenzen, und wobei die beiden Halteschenkel Stützflächen aufweisen, die jeweils eine die Hochachse unter einem Winkel schneidende Ebene aufspannen, mehreren Klemmelementen, wobei jedem der beiden Halteschenkel zumindest ein Klemmelement der mehreren Klemmelemente zugeordnet ist, das mit einer dem jeweiligen Halteschenkel zugewandten Gegenfläche in Anlage mit der Stützfläche des jeweiligen Halteschenkels ist, wobei die Klemmelemente an von den Gegenflächen abgewandten Außenseiten Klemmflächen aufweisen, zwischen denen der Fußabschnitt des Flächenelementes einspannbar ist, mehreren Schrauben zur Verstellung der Klemmelemente relativ zu den beiden Halteschenkeln entlang der Hochachse, wobei sich die Schrauben durch in den Klemmelementen ausgebildete Durchgangsbohrungen hindurch erstrecken, wobei jede der Schrauben sich mit einem Schraubenkopf an einer vom Haltesteg abgewandten Vorderseite des jeweiligen Klemmelementes abstützt und mit einem Gewindeabschnitt aus einer dem Haltesteg zugewandten Unterseite des jeweiligen Klemmelementes herausragt.

Aus der EP 2 921 607 B1 ist eine Haltevorrichtung für eine Platte mit einer Halteschiene bekannt. Die Halteschiene ist in Form eines sich in Längsrichtung erstreckenden U-Profils mit einem von zwei Halteschenkeln begrenzten Aufnahmeschlitz zur klemmenden Aufnahme eines Fußabschnitt des Flächenelementes gestaltet. In dem Aufnahmeschlitz ist ein mehrteiliges Keilmodul angeordnet, das eine Verstellung der Vertikallage der Plattenebene ermöglicht. Hierzu weist das Keilmodul eine das untere Ende der Platte überspannende Wiege und mehrere beidseitig von der Wiege abragende Positionierungskeile auf. Konkret sind beidseitig untere Positionierungskeile, die mit der Wiege zusammenwirken, und obere Positionierungskeile vorgesehen. Die oberen Positionierungskeile stützen sich an schräg angestellten Stützflächen der Halteschenkel ab und können mittels Regulierungsschrauben entlang einer Vertikalachse verstellt werden. Die Regulierungsschrauben durchgreifen die oberen Positionierungskeile und sind in die unteren Positionierungskeile eingeschraubt. Die unteren Positionierungskeile schlagen bei Schwingungsamplituden der Wiege bezogen auf die Vertikalachse von mehr als +/- 1° an Anschlägen der Halteschenkel an, um ein Kippen der Platte bei Montage zu verhindern.

Aufgabe der vorliegenden Erfindung ist es, eine Haltevorrichtung für ein einseitig eingespanntes Flächenelement einer Brüstung oder eines Geländers bereitzustellen, die einfach herzustellen ist und bei Montage eine einfache Anpassung beziehungsweise Verstellung der Vertikallage einer Ebene des Flächenelementes ermöglicht.

Diese Aufgabe ist durch eine Haltevorrichtung der eingangs genannten Art dadurch gelöst, dass die herausragenden Gewindeabschnitte der Schrauben zumindest abschnittsweise in die Halteschenkel der Haltschienen eingeschraubt sind.

Von Vorteil ist, dass durch das Einschrauben der Schrauben direkt in die Halteschenkel der Halteschiene eine kompakt bauende und bauteilreduzierte Haltevorrichtung bereitgestellt wird. Weiterhin ermöglicht die Anordnung der Klemmelemente beidseits des zu haltenden Flächenelementes eine klemmende Fixierung des Flächenelementes in dem Aufnahmeschlitz. Denn beim Verstellen der Klemmelemente gleiten diese an den schräg angeordneten Stützflächen der Halteschenkel entlang, wodurch der Abstand der Klemmelemente zu der Hochachse beziehungsweise zu dem zu haltenden Flächenelement angepasst, respektive vergrößert oder verkleinert werden kann. Weiterhin ist von Vorteil, dass die Klemmelemente durch die Schrauben unabhängig voneinander entlang der Längsachse verstellt werden können. Auf diese Weise kann die Vertikallage einer vom Flächenelement aufgespannten Hauptebene, respektive ein Winkel zwischen der Hauptebene des Flächenelementes und der Hochachse der Haltevorrichtung verändert werden. Bei Verstellung des zumindest einen Klemmelementes des ersten Schenkels beziehungsweise des zumindest einen Klemmelementes des zweiten Schenkels wird das Flächenelement im eingesetzten Zustand durch hin zum ersten Schenkel oder hin zum zweiten Schenkel gekippt. Somit kann das zu haltende Flächenelement im eingesetzten Zustand durch Verstellung der Klemmelemente entlang der Hochachse mittels der Schrauben in der Halteschiene ausgerichtet werden. Wenn der Winkel zwischen der Hauptebene des eingesetzten Flächenelementes und der Hochachse einen maximalen Wert erreicht, schlägt das Flächenelement zumindest mittelbar an dem jeweiligen Klemmelement an, um ein weiteres Kippen des Flächenelementes bei Montage zu verhindern.

Zur Verstellung der Vertikallage beziehungsweise der Winkelausrichtung des zu haltenden Flächenelementes relativ zur Hochachse kann das zumindest eine Klemmelement an einem der beiden Halteschenkel gelockert werden, wobei das zumindest eine Klemmelement an dem anderen der beiden Halteschenkel weiter gespannt werden kann, um den Klemmdruck auf das zu haltende Flächenelement wieder aufzubauen. Dabei werden die Klemmelemente durch Lösen der zugehörigen Schrauben gelockert und können dann entlang der Hochachse von dem Haltesteg weiter wegbewegt werden. Dagegen können die Klemmelemente durch Festziehen der Schrauben hin zum Haltesteg der Halteschiene bewegt werden, sodass bei eingesetztem Flächenelement die Klemmelemente weiter gespannt werden. Beim Lösen beziehungsweise Festziehen der Schrauben drehen sich die Klemmelemente nicht mit, weil diese zwischen zwei einander gegenüberliegenden Seiten abgestützt sind, nämlich an der Stützfläche und dem zu haltenden Flächenelement. Auf diese Weise lässt sich die Vertikallage in einem Winkelbereich verstellen, der durch die beiden maximalen Werte, bei denen das eingesetzte Flächenelement an dem jeweiligen Klemmelement zumindest mittelbar anschlägt, vorgegeben ist. Der Winkel kann in einem Bereich von beispielsweise -3° bis +3°, vorzugsweise -2° bis +2° liegen. Bei Einnahme der maximalen Winkel von, beispielsweise -3° beziehungsweise +3°, ist das zumindest eine Klemmelement des ersten Schenkels in einer Minimal-Stellung und das zumindest eine Klemmelement des zweiten Schenkels in einer Maximal-Stellung, beziehungsweise umgekehrt. Die Minimal-Stellung und die Maximal-Stellung sind Endstellungen, zwischen denen die Klemmelemente mittels der Schrauben entlang der Hochachse verstellt werden können.

Durch die Haltevorrichtung lässt sich somit die Vertikallage der durch das Flächenelement aufgespannten Hauptebene anpassen beziehungsweise verstellen. Dies ist besonders dann von Vorteil, wenn mehrere entlang der Längsachse der Halteschiene hintereinander angeordnete Haltschienen vorhanden sind, in denen mehrere der Flächenelemente angeordnet sind, die exakt vertikal beziehungsweise parallel zueinander auszurichten sind. Grundsätzlich denkbar und möglich ist aber auch, dass in dem Aufnahmeschlitz der einen Halteschiene mehrere der Flächenelemente entlang der Längsachse hintereinander angeordnet sein können, die auszurichten sind.

Weiterhin können die Halteschenkel an einander zugewandten Innenseiten jeweils eine Stufe aufweisen, in die die herausragenden Gewindeabschnitte der Schrauben zumindest abschnittsweise eingeschraubt sind. Insbesondere sind die Stufen bezogen auf die Hochachse einander gegenüberliegend angeordnet. Entlang der Stufen ist somit der Abstand der beiden Halteschenkel zueinander reduziert, wodurch der Aufnahmeschlitz entlang der Stufen verengt ist. Dadurch wird die mögliche Kippbewegung des zu haltenden Flächenelementes in der Halteschiene eingeschränkt, wodurch das Einsetzen des Flächenelementes in der Haltevorrichtung vereinfacht wird. In bevorzugter Weise sind bezogen auf die Hochachse die Stufen zwischen den Stützflächen und dem Haltesteg angeordnet. Insbesondere schließen sich die Stufen unmittelbar an die Stützflächen an oder sind geringfügig von den Stützflächen beabstandet. Geringfügig kann bedeuten, dass bezogen auf die Hochachse der axiale Abstand zwischen der Stützfläche und der Stufe des jeweiligen Halteschenkels maximal 20 mm beträgt. Dadurch können zum einen kürzere Schrauben verwendet werden und zum anderen wird dadurch eine kompakt bauende Halteschiene bereitgestellt. Des Weiteren können die Stützflächen im oberen Drittel des Aufnahmeschlitzes ausgebildet sein.

Gemäß einem Aspekt der vorliegenden Erfindung können in den Stufen Längsschlitze ausgebildet sein, in die die herausragenden Gewindeabschnitte der Schrauben zumindest abschnittsweise eingeschraubt sind. Auf diese Weise bilden die Längsschlitze Gewindekanäle, in die die Schrauben an beliebiger Position entlang der Längsachse eingeschraubt werden können. Die Längsschlitze können sich jeweils parallel zur Längsachse erstrecken. In bevorzugter Weise weist jeder Schenkel genau eine der Stufen auf. Insbesondere weist jede der Stufen genau einen der Längsschlitze auf. Die Längsschlitze können jeweils an einander gegenüberliegenden Schlitzwänden parallel zur Längsachse ausgebildete Rillen zur formschlüssigen Aufnahme der Schrauben aufweisen. Die Rillen an der jeweiligen Schlitzwand können parallel übereinander angeordnet sein. Auf diese Weise bilden die Längsschlitze Gewindekanäle, in die die Schrauben an beliebiger Position entlang der Längsachse eingeschraubt werden können.

Gemäß einem weiteren Aspekt weisen die Halteschenkel Gewindebohrungen auf, in die die aus der Unterseite der Klemmelemente herausragenden Gewindeabschnitte der Schrauben zumindest abschnittsweise eingeschraubt sind. Dadurch können auf einfache und reproduzierbare Art und Weise die Klemmelemente entlang der Hochachse verstellt werden. Zweckmäßigerweise weisen die Schrauben zu Innengewinden der Gewindebohrungen korrespondierende Außengewinde auf. Des Weiteren können in den Stufen Schlitze gebildet sein, die sich parallel zur Längsachse erstrecken. Insbesondere schneiden die Schlitze die Gewindebohrungen. Auf diese Weise kann die Erstellung der Gewindebohrungen vereinfacht werden, weil die Innengewinde direkt in die Schlitze geschnitten werden können und somit auf das Bohren von Kernlöchern für die Gewindebohrungen verzichtet werden kann.

Alternativ kann vorgesehen sein, dass die Schrauben selbstschneidende Schrauben sind, die sich beim Einschrauben in die Halteschenkel bohren oder ein Gewinde in ein vorgebohrtes Loch schneiden.

In bevorzugter Weise sind Schraubachsen der Schrauben parallel zur Hochachse ausgerichtet. Dadurch kann eine schlanke Halteschiene bereitgestellt werden, die eine möglichst geringe Erstreckung entlang einer Querachse, die senkrecht zu der Hochachse und der Längsachse steht, aufweist.

Des Weiteren können Rückstellelemente vorgesehen sein, die die Klemmelemente in einer Richtung weg vom Haltesteg mit einer Rückstellkraft beaufschlagen. Auf diese Weise wird die Verstellung der Klemmelemente weg vom Haltesteg beim Lösen der dem jeweiligen Klemmelement zugeordneten Schrauben vereinfacht. Insbesondere können die Rückstellelemente bezogen auf die Hochachse zwischen den Klemmelementen und den Stufen angeordnet sein. Die Rückstellelemente können sich an den Stufen abstützen. Insbesondere können die Rückstellelemente zwischen den Unterseiten der Klemmelemente und Oberseiten der Stufen, die den Klemmelementen zugewandt sind, angeordnet sein.

Weiterhin können die Rückstellelemente streifenförmig ausgebildet sein und können sich entlang der Längsachse der Halteschiene erstrecken. Dadurch wird eine gleichmäßige Rückstellung des jeweiligen Klemmelementes ermöglicht. Insbesondere sind die streifenförmigen Rückstellelemente parallel zur Längsachse angeordnet. Vorzugsweise liegt das streifenförmige Rückstellelement flächig am jeweiligen Klemmelement an. Das jeweilige Rückstellelement kann eine Länge aufweisen, die der Länge des jeweiligen Klemmelementes entspricht. Entsprechend kann jedem der Klemmelemente genau nur eines der streifenförmigen Rückstellelemente zugeordnet sein. Ebenso können aber auch entlang der Längsachse hintereinander mehrere der streifenförmigen Rückstellelemente angeordnet sein. Jedem der Klemmelemente kann entsprechend auch mehr als nur eines der Rückstellelemente zugeordnet sein. Die Rückstellelemente können aus einem geschäumten Material sein. Schaumstoffe eignen sich aufgrund deren reversibel komprimierbarer Struktur besonders gut als Rückstellelemente, da diese die Klemmelemente zumindest abschnittsweise gleichmäßig mit einer Rückstellkraft beaufschlagen können. Als Material für die Rückstellelemente eignen sich kompressible Kunststoffe, von denen lediglich beispielhaft und keineswegs abschließend Polyurethan und Chloropren-Kautschuk genannt werden. Des Weiteren können die Rückstellelemente Federn aufweisen. Die Federn können Metall, Kunststoff und/oder Faserverbundmaterial umfassen. Die Federn können entlang der Längsachse insbesondere gleichbeabstandet zueinander angeordnet sein. Weiterhin kann vorgesehen sein, dass sich die Schrauben durch die Rückstellelemente erstrecken. Hierzu können die Rückstellelemente zentrale Öffnungen aufweisen, wie es zum Beispiel bei herkömmlichen Federn der Fall ist. Ebenso können die Schrauben durch die Rückstellelemente geschraubt sein. Dies reduziert vor allem bei streifenförmigen Rückstellelementen aus Schaumstoff den Montageaufwand.

Der zwischen der von der jeweiligen Stützfläche aufgespannten Ebene und der Hochachse gebildete Winkel kann sich in einer Richtung weg vom Haltesteg öffnen. Dadurch bilden die einander gegenüberliegenden Stützflächen divergierende Rampen, die sich zur offenen Seite der Halteschiene öffnen. Die offene Seite der Halteschiene ist an einem dem Haltesteg gegenüberliegenden Ende der Halteschiene angeordnet. Durch die offene Seite kann das zu haltende Flächenelement in den insbesondere U-förmigen Aufnahmeschlitz eingesetzt werden. Der jeweilige Winkel kann in einem Bereich von 5° und 50° liegen, wobei besonders gute Ergebnisse mit einem Winkel in einem Bereich von 8° und 15° erzielt worden sind. Vorzugsweise ist der Winkel zwischen den Ebenen und der Hochachse gleichgroß.

Vorzugsweise weisen die Klemmelemente an von den Gegenflächen abgewandten Außenseiten der Klemmelemente Klemmflächen auf, zwischen denen das zu haltende Flächenelement einspannbar ist. Insbesondere sind die Klemmflächen parallel zueinander, respektive parallel zur Hochachse ausgerichtet. Die Klemmelemente können aus Metall, insbesondere aus Aluminium sein beziehungsweise bestehen. Dadurch werden besonders stabile Klemmelemente bereitgestellt, mittels denen das zu haltende Flächenelement sicher einspannbar ist. Um ein Verkratzen des Flächenelementes zu verhindern, können Kunststoff- oder Gummiprofile vorgesehen sein, an den Klemmelementen angeordnet sind und einen direkten Kontakt der Klemmelemente mit dem zu haltenden Flächenelement verhindern. Das zu haltende Flächenelement kann beispielsweise eine Glasscheibe, insbesondere aus Verbundsicherheitsglas sein.

Die Klemmelemente können leistenartig ausgebildet sein. Dadurch kann das zu haltende Flächenelement entlang der Längsachse gleichmäßig eingespannt werden. Insbesondere weisen die Klemmelemente eine Haupterstreckungsrichtung auf, die sich parallel zur Längsachse der Halteschiene erstreckt. Zur Vereinfachung der Montage können die Klemmelemente eine maximale Länge von 100 cm aufweisen. Im Gegensatz dazu kann die Halteschiene auch eine Länge von mehr als 100 cm aufweisen. Insofern kann jedem der Schenkel entsprechend mehrere der Klemmelemente zugeordnet sein, die entlang der Längsachse an dem jeweiligen Schenkel hintereinander liegend angeordnet sind. Grundsätzlich möglich ist aber auch, dass jedem der beiden Halteschenkel genau nur eines der Klemmelemente zugeordnet. Dadurch wird die Anzahl an Bauteilen der Haltevorrichtung reduziert. Weiterhin kann die Länge des einen Klemmelementes an dem jeweiligen Schenkel beziehungsweise die Gesamtlänge der Klemmelemente an dem jeweiligen Schenkel zumindest im Wesentlichen der Länge der Halteschiene beziehungsweise des Aufnahmeschlitzes entsprechen. Zumindest im Wesentlichen bedeutet, dass die Länge des Klemmelementes des jeweiligen Schenkels beziehungsweise die Gesamtlänge der Klemmelemente des jeweiligen Schenkels mindestens 90 % der Länge der Halteschiene beziehungsweise des Aufnahmeschlitzes entspricht. Als Länge wird die Erstreckung des jeweiligen Bauteils entlang der Längsachse der Halteschiene verstanden.

Die Anzahl der Schrauben, mit denen das jeweilige Klemmelement am zugeordneten Halteschenkel befestigt ist, kann in Abhängigkeit von der Länge des jeweiligen Klemmelementes variieren. In bevorzugter Weise weisen die Klemmelemente jeweils zumindest zwei der Durchgangsbohrungen auf, durch die sich jeweils eine der Schrauben erstreckt. Wenn das jeweilige Klemmelement mit mehreren der Schrauben befestigt ist, können die Schrauben an dem jeweiligen Klemmelement auf einer gedachten Geraden und insbesondere gleichbeabstandet zueinander angeordnet sein. In zweckmäßiger Weise verläuft die gedachte Gerade parallel zur Längsachse der Halteschiene. Grundsätzlich möglich ist aber auch, dass das jeweilige Klemmelement mit nur einer einzigen Schraube am zugeordneten Halteschenkel befestigt ist. Dies kann beispielsweise dann der Fall sein, wenn jedem der beiden Halteschenkel mehrere der Klemmelemente zugeordnet sind, die jeweils nur eine Länge von weniger als 20 % der Länge der Halteschiene und/oder weniger als 20 mm aufweisen.

Zur Abstützung des Flächenelementes gegenüber dem Haltesteg kann in dem Aufnahmeschlitz der Halteschiene ein Abstandhalter angeordnet sein. Der Abstandhalter ist ein separates Bauteil, das in den Aufnahmeschlitz der Halteschiene eingesetzt werden kann. Zweckmäßigerweise kann der Abstandhalter vor dem Einsetzen des zu haltenden Flächenelementes auf dessen unteres Ende aufgesteckt und zusammen mit dem Flächenelement in den Aufnahmeschlitz eingesetzt werden. Der Abstandhalter kann deformierbar, respektive biegsam sein, sodass der Abstandhalter die Winkelverstellung des zu haltenden Flächenelementes bei Verstellung der Klemmelemente zulässt. Insbesondere ist beziehungsweise besteht der Abstandhalter aus einem Kunststoffmaterial. Der Abstandhalter kann zumindest zwei einander gegenüberliegend angeordnete Füße aufweisen, über die sich der Abstandhalter am Haltesteg der Halteschiene abstützt. Die Füße können an deren gehaltenem Ende eine Biegestelle aufweisen, um bei Ausrichtung des Flächenelementes nachgeben zu können.

Die Halteschiene kann ein einteiliger Profilkörper sein, bei dem die beiden Halteschenkel an dem Haltesteg angeformt sind. Mit anderen Worten bildet die Halteschiene aus den beiden Halteschenkeln und dem Haltesteg einen einteiligen Profilkörper, der somit als ein Bauteil an einem Bauwerk montiert werden kann. Weiterhin kann die Halteschiene über deren gesamte Länge einen gleichbleibenden Querschnitt aufweisen. Insbesondere ist die Halteschiene ein stranggepresster Profilkörper. Die Halteschiene kann aus Metall sein respektive bestehen. Das Metall kann beispielsweise Aluminium sein. Um eine möglichst leichte Halteschiene bereitzustellen, kann die Halteschiene ein Hohlkammerprofil aufweisen.

Bevorzugte Ausführungsformen werden nachstehend anhand der Zeichnungsfiguren erläutert. Hierin zeigt:
- Figur 1: eine Haltevorrichtung gemäß einer Ausführungsform in teilweiser Explosionsansicht;
- Figur 2: einen vergrößerten Teilausschnitt der Haltevorrichtung gemäß Figur 1 mit einem eingesetzten Flächenelement in Seitenansicht;
- Figur 3: eine vergrößerte Detailansicht der Haltevorrichtung aus Figur 2 mit dem eingesetzten Flächenelement;
- Figur 4: die Haltevorrichtung mit dem Flächenelement in Seitenansicht, wobei das Flächenelement parallel zu einer Hochachse ausgerichtet ist;
- Figur 5: die Haltevorrichtung mit dem Flächenelement in Seitenansicht, wobei das Flächenelement mit der Hochachse einen ersten Winkel einschließt; und
- Figur 6: die Haltevorrichtung mit dem Flächenelement in Seitenansicht, wobei das Flächenelement mit der Hochachse einen zweiten Winkel einschließt.

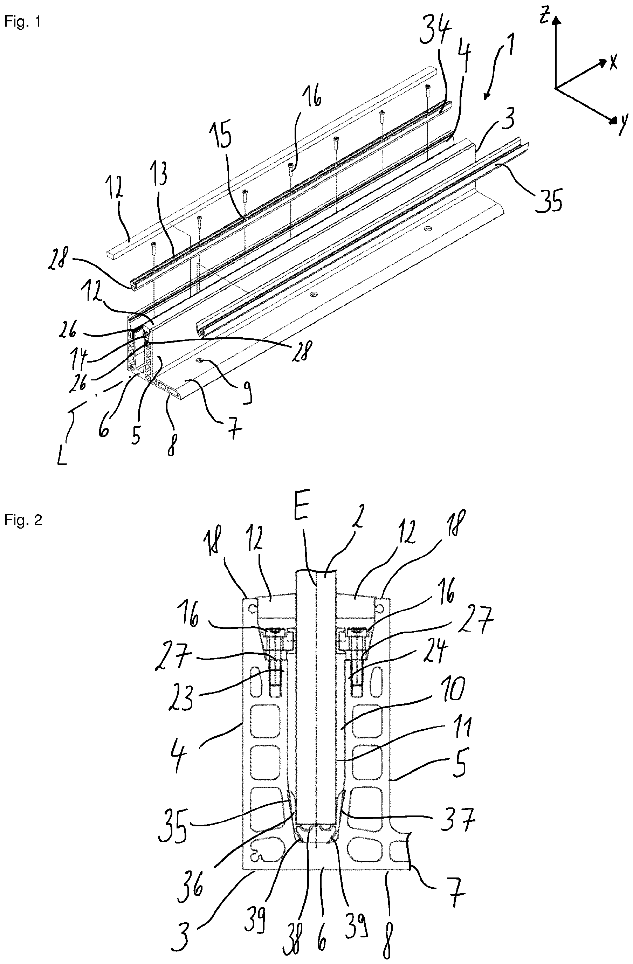

In Figuren 1 bis 6 ist eine Haltevorrichtung 1 für ein Flächenelement 2 einer Brüstung oder eines Geländers gemäß einer Ausgestaltung der vorliegenden Erfindung dargestellt. Zur Verdeutlichung der Funktionsweise ist in den Figuren 2 bis 6 die erfindungsgemäße Haltevorrichtung 1 zusammen mit dem Flächenelement 2 gezeigt. Das Flächenelement 2 ist eine Platte, bei der es sich vorzugsweise um eine Glasscheibe aus Verbundsicherheitsglas handelt.

In der Figur 1 ist zur Verdeutlichung der Ausrichtung der Haltevorrichtung 1 im Raum ein kartesisches Koordinatensystem mit den Raumachsen X, Y und Z eingezeichnet. Die beiden Raumachsen X und Y spannen gemeinsam eine horizontale Ebene auf. Die Raumachse Z ist vertikal ausgerichtet und steht senkrecht zu den beiden Raumachsen X und Y.

Die Haltevorrichtung 1 weist eine Halteschiene 3 auf, die sich entlang einer Längsachse L erstreckt, die parallel zur Raumachse X verläuft. Die Halteschiene 3 kann ein stranggepresstes Aluminiumprofil sein, das über dessen gesamte Länge einen gleichbleibenden Querschnitt aufweist. Die Halteschiene ist, hier, als Hohlkammerprofil gestaltet, wobei diese grundsätzlich auch aus einem Vollmaterial hergestellt sein könnte.

Konkret weist die Halteschiene 3 einen ersten Halteschenkel 4, einen zweiten Halteschenkel 5 sowie einen die beiden Halteschenkel 4, 5 miteinander verbindenden Haltesteg 6 auf. In der hier gezeigten Ausführungsform weist die Halteschiene 3 zudem einen optionalen Befestigungskragen 7 auf, der in Richtung der Raumachse Y seitlich vom zweiten Halteschenkel 5 absteht. Der Befestigungskragen 7 bildet zusammen mit dem Haltesteg 6 eine durchgehende Auflagefläche 8 der Halteschiene 3 aus. Die Auflagefläche 8 liegt in der horizontalen Ebene, die durch die beiden Raumachsen X und Y aufgespannt ist. In dem Befestigungskragen 7 sind mehrere, hier exemplarisch drei, Befestigungsbohrungen 9 ausgebildet, die der Befestigung der Halteschiene 3 an einem Bauwerk (nicht gezeigt) dienen. In der Figur 1 ist der Übersichtlichkeit halber nur eine der drei Befestigungsbohrungen mit dem Bezugszeichen 9 versehen.

Die beiden Halteschenkel 4, 5 ragen beidseits einer parallel zur Raumachse Z verlaufenden Hochachse H vom Haltesteg 6 ab und sind gleichbeabstandet zur Hochachse H angeordnet. Zusammen mit dem Haltesteg 6 begrenzen die Haltschenkel 4, 5 einen U-förmigen Aufnahmeschlitz 10 zur Aufnahme eines Fußabschnitts 11 des Flächenelementes 2.

Im eingesetzten Zustand des Flächenelementes 2, der in den Figuren 2 bis 6 gezeigt ist, ist das Flächenelement 2 mit dem Fußabschnitt 11 in dem Aufnahmeschlitz 10 eingesetzt. Erkennbar ist, dass das Flächenelement 2 ausschließlich in dem Aufnahmeschlitz 10 zwischen den beiden Halteschenkeln 4, 5 gehalten und damit einseitig, das heißt im Fußabschnitt 11 eingespannt ist. Die Länge des Flächenelementes 2 entspricht, hier, zumindest im Wesentlichen, das heißt zu zumindest 95 %, der Länge der Halteschiene 3. An freien Enden 18 der beiden Halteschenkel 4, 5 sind beidseits des Flächenelementes 2 Dichtleisten 12 angeordnet, die im eingesetzten Zustand des Flächenelementes 2 an diesem Anliegen und den Aufnahmeschlitz 10 abdichten. Entsprechend verdecken die Dichtleisten 12 auch die im Aufnahmeschlitz 10 angeordneten Klemmelemente 13, 14 sowie die Schrauben 16.

Zur Fixierung des Flächenelementes 2 zwischen den beiden Halteschenkel 4, 5 sind Klemmelemente 13, 14 vorgesehen. Die Klemmelemente 13, 14 sind entlang der Hochachse H verstellbar angeordnet und ermöglichen neben der Fixierung des Flächenelementes 2 auch eine Verstellung der Vertikallage einer durch das Flächenelement 2 aufgespannten Hauptebene E. Auf diese Weise kann das Flächenelement 2 in dem Aufnahmeschlitz 10 geneigt beziehungsweise gekippt werden. Damit kann die Vertikallage der Hauptebene E des zwischen den beiden Klemmelementen 13, 14 eingesetzten Flächenelementes 2 mit einem Winkel α ausgeglichen werden. Der Winkel α kann beispielsweise maximal +/- 1° betragen.

Konkret sind die Klemmelemente 13, 14 leistenartig ausgebildet und weisen eine Haupterstreckungsrichtung auf, die sich parallel zur Längsachse L der Halteschiene 3 erstreckt. Jedes der Klemmelemente 13, 14 weist mehrere, hier exemplarisch sieben Durchgangsbohrungen 15 auf, durch die sich jeweils eine Schraube 16 erstreckt. In der Figur 1 sind der Übersichtlichkeit halber nur jeweils eine der Durchgangsbohrungen und eine der Schrauben mit den Bezugszeichen 15 beziehungsweise 16 versehen. Die Schrauben 16 definieren jeweils eine Schraubenachse A, die parallel zur Hochachse H ausgerichtet ist. Mittels der Schrauben 16 sind die Klemmelemente 13, 14 relativ zu den beiden Halteschenkeln 4, 5 entlang der Hochachse H an diesen verstellbar befestigt. Somit ist ein erstes Klemmelementes 13 der beiden Klemmelemente 13, 14 dem ersten Halteschenkel 4 und ein zweites Klemmelement 14 der beiden Klemmelemente 13, 14 dem zweiten Halteschenkel 5 zugeordnet. Die Schrauben 16 erstrecken sich durch die in den Klemmelementen 13, 14 ausgebildeten Durchgangsbohrungen 15 hindurch. Jede der Schrauben 16 stützt sich mit einem Schraubenkopf 17 an einer vom Haltesteg 6 abgewandten Vorderseite des jeweiligen Klemmelementes 13, 14 ab. Weiterhin ragen die Schrauben 16 jeweils mit einem Gewindeabschnitt 19 aus einer dem Haltesteg 6 zugewandten Unterseite 20 des jeweiligen Klemmelementes 13, 14 heraus. Die herausragenden Gewindeabschnitte 19 der Schrauben 16 sind zumindest abschnittsweise in die Halteschenkel 4, 5 eingeschraubt.

Die beiden Halteschenkel 4, 5 weisen an einander zugewandten Innenseiten 21, 22 jeweils eine Stufe 23, 24 auf, das heißt die Innenseiten 21, 22 sind gestuft ausgebildet. In den Stufen 23, 24 ist jeweils ein Längsschlitz 26 gebildet, der sich parallel zur Längsachse L erstreckt. An einander gegenüberliegenden Schlitzwänden 25 der Längsschlitze 26 sind parallel zur Längsachse L ausgerichtete Rillen zur formschlüssigen Aufnahme der herausragenden Gewindeabschnitte 19 der Schrauben 16 ausgebildet. Die Stufen 23, 24 weisen weiterhin jeweils eine Oberfläche 27 auf. Die Oberflächen 27 können, wie hier gezeigt, in einer gemeinsamen Ebene liegen, die senkrecht zur Hochachse H ausgerichtet ist. Die Längsschlitze 26 erstrecken sich ausgehend von der Oberfläche 27 der jeweiligen Stufe 23, 24 in diese hinein. Entsprechend können die Längsschlitze 26 auch als Schraubkanäle bezeichnet werden, in die die herausragenden Gewindeabschnitte 19 der Schrauben 16 eingeschraubt sind.

Zwischen den Klemmelementen 13, 14 und den Stufen 23, 24 sind Rückstellelemente 28 angeordnet, die die Klemmelemente 13, 14 in einer Richtung weg vom Haltesteg 6 mit einer Rückstellkraft F beaufschlagen. Somit sind die Rückstellelemente 28 bezogen auf die Hochachse H zwischen den Klemmelementen 13, 14 und den Stufen 23, 24 angeordnet, wobei sich die Rückstellelemente 28 an den Oberflächen 27 der Stufen 23, 24 und den Unterseiten 20 der Klemmelemente 13, 14 abstützen. Die Rückstellelemente 28 sind, exemplarisch, als Schaumstoffstreifen gezeigt, die sich entlang der Längsachse X der Halteschiene 3 erstrecken. Die Rückstellelemente 28 könnten auch als Federn ausgestaltet sein. Die Schrauben 16 sind, hier, durch die Rückstellelemente 28 durchgeschraubt.

Bezogen auf die Hochachse H weisen die beiden Halteschenkel 4, 5 zwischen den Stufen 23, 24 und deren freien Enden 18 Stützflächen 29 auf, die schräg zur Hochachse H angeordnet sind. Konkret spannen die beiden Stützflächen 29 jeweils eine Ebene S₄, S₅ auf, die die Hochachse H jeweils unter einem Winkel β₄, β₅ schneidet. Dabei sind die beiden Winkel β₄, β₅, hier, gleich groß und weisen mit der Hochachse H einen gemeinsamen Schnittpunkt auf. Die beiden Winkel β₄, β₅ öffnen sich in einer Richtung weg vom Haltesteg 6, sodass die beiden Halteschenkel 4, 5 entlang der Stützflächen 29 auseinander divergieren. Die Stützflächen 29 schließen sich, mit deren unteren Enden, unmittelbar an die Stufen 23, 24 an und sind, mit deren oberen Enden, von den freien Enden 18 der Halteschenkel 4, 5 beabstandet. Zwischen den Stützflächen 29 und den freien Enden 18 sind die Dichtleisten 12 angeordnet, die an den Halteschenkeln 4, 5 gehalten sind. Entlang der Stufen 23, 24 ist somit der Abstand der beiden Halteschenkel 4, 5 zueinander reduziert, wodurch der Aufnahmeschlitz 10 beginnend mit den Oberflächen 27 der Stufen 23, 24 in einer Richtung hin zum Haltesteg 6 verengt ist. Am unteren Ende des Haltesteges 6 läuft der Aufnahmeschlitz 10 weiter konisch zu.

Die Klemmelemente 13, 14 weisen jeweils an einer dem jeweils zugeordneten Halteschenkel 4, 5 zugewandten Außenseite eine Gegenfläche 30, 31 auf, die mit der Stützfläche 29 des jeweiligen Halteschenkels 4, 59 in Anlage ist. In dem hier gezeigten Ausführungsbeispiel ist die Gegenfläche 30, 31 zu der jeweils zugeordneten Stützfläche 29 parallel ausgerichtet. An von den Gegenflächen 30, 31 abgewandten Außenseiten weisen die Klemmelemente 13, 14 jeweils eine Klemmfläche 32, 33 auf, zwischen denen der Fußabschnitt 11 des Flächenelementes 2 einspannbar ist. In dem hier gezeigten Ausführungsbeispiel sind die Klemmflächen 32, 33 parallel zueinander und somit auch parallel zur Hochachse H ausgerichtet. An den Klemmelementen 13, 14 sind weiterhin Kantenschutzprofile 34 aufgesteckt, die den direkten Kontakt der Klemmelemente 13, 14 mit dem Flächenelement 2 verhindern.

Durch Lösen beziehungsweise Festziehen der jeweiligen Schrauben 16 können somit die Klemmelemente 13, 14 entlang der Hochachse H verstellt werden, wobei sich durch die rampenartige Anordnung der Stützflächen 29 der Abstand der Klemmflächen 32, 33 zu der Hochachse H verändert, respektive verkleinert oder vergrößert. Auf diese Weise lässt sich die Vertikallage der durch das Flächenelement 2 aufgespannten Hauptebene E verstellen.

Am unteren Ende des Flächenelementes 2 stützt sich dieses über einen aus einem Kunststoffmaterial hergestellten Abstandhalter 35 an dem Haltesteg 6 der Halteschiene 3 ab, der eine Verstellung der Vertikallage der Hauptebene E des Flächenelementes 2 zulässt. Konkret erstreckt sich der Abstandhalter 35 entlang der Längsachse L und kann bereits vor dem Einsetzen des Flächenelementes 2 auf das untere Ende des Flächenelementes 2 aufgesteckt und zusammen mit dem Flächenelement 2 in den Aufnahmeschlitz 10 eingesetzt werden. Konkret weist der Abstandhalter 35 zwei einander gegenüberliegende Profilschenkel 36, 37, die beidseits der Hochachse H von einer Oberseite eines Profilsteg 38 abragen. Der Profilsteg 38 verbindet die beiden Profilschenkel 36, 37 miteinander und kann einen Querschnitt aufweisen, der, hier, mehrfach trapezförmig gestaltet ist. Weiterhin sind an einer Unterseite des Profilsteges 38 zwei Füße 39 angeordnet, über die sich der Abstandhalter 35 am Haltesteg 6 abstützt.

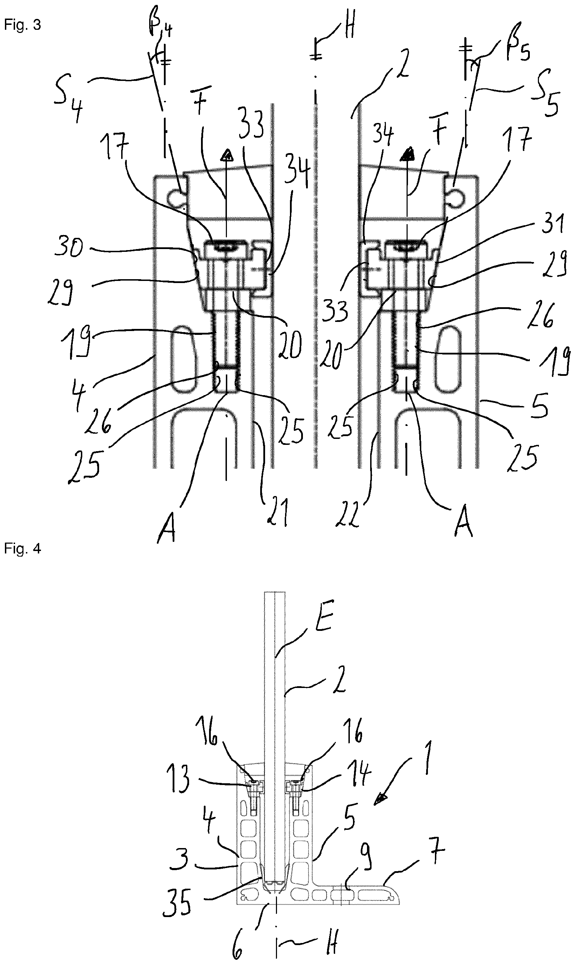

Typischerweise wird die Halteschiene 3 bei Befestigung auf dem Untergrund ausgerichtet, sodass die Auflagefläche 8 in der horizontalen Ebene, die durch die beiden Raumachsen X und Y aufgespannt ist, liegt. In der Figur 4 ist die Hauptebene E parallel zur Hochachse H ausgerichtet. Das Flächenelement 2 steht vertikal auf und ist zwischen den beidseitig vom Flächenelement 2 angeordneten Klemmelementen 13, 14 eingespannt.

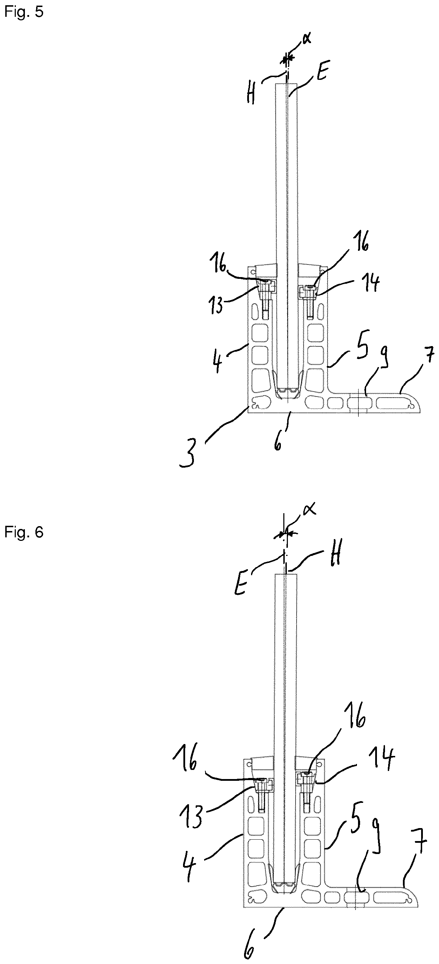

Oftmals muss das Flächenelement 2 nach dem Einsetzen jedoch noch ausgerichtet werden, um beispielsweise Montageungenauigkeiten bei der Befestigung der Halteschiene 3 auf dem Untergrund auszugleichen. Gleiches kann auch notwendig sein, wenn mehrere der Flächenelemente 2 entlang der Längsachse L hintereinander angeordnet sind, die vertikal und parallel zueinander auszurichten sind. Zur Ausrichtung des Flächenelementes 2 werden die Schrauben 16 an einem der beiden Klemmelemente 13, 14 gelöst und an dem anderen der beiden Klemmelemente 13, 14 weiter festgezogen werden, um den Klemmdruck auf das Flächenelement 2 wieder aufzubauen. In der Figur 5 sind die Schrauben 16 am ersten Klemmelement 13 in einer Maximal-Stellung, in der sie gegenüber der in der Figur 4 gezeigten Mittel-Stellung etwas gelöst beziehungsweise weiter aus dem Längsschlitz 26 herausgeschraubt sind. In der Figur 5 ist weiter erkennbar, dass die Schrauben 16 am zweiten Klemmelement 14 in einer Minimal-Stellung sind, in der sie gegenüber der in der Figur 4 gezeigten Mittel-Stellung weiter angezogen beziehungsweise weiter in den Längsschlitz 26 hineingeschraubt sind. Entsprechend ist die Hauptebene E des Flächenelementes 2 hin zum zweiten Halteschenkel 5 gekippt, sodass die Hauptebene E mit der Hochachse H den Winkel α einschließt. Der Winkel α entspricht, hier, einem Winkel von etwa 1°. In der Figur 6 ist analog zur Figur 5 der Zustand gezeigt, bei dem die Hauptebene E hin zum ersten Halteschenkel 4 gekippt ist. Der Winkel α entspricht, hier, einem Winkel von etwa 1 °. Damit kann das Flächenelement 2 in der Haltevorrichtung 1 in einem Winkelbereich von, hier, +/- 1° verstellt werden.

### Bezugszeichenliste

- 1: Haltevorrichtung
- 2: Flächenelement
- 3: Halteschiene
- 4: Halteschenkel
- 5: Halteschenkel
- 6: Haltesteg
- 7: Befestigungskragen
- 8: Auflagefläche
- 9: Befestigungsbohrung
- 10: Aufnahmeschlitz
- 11: Fußabschnitt
- 12: Dichtleiste
- 13: Klemmelement
- 14: Klemmelement
- 15: Durchgangsbohrung
- 16: Schraube
- 17: Schraubenkopf
- 18: Ende
- 19: Gewindeabschnitt
- 20: Unterseite
- 21: Innenseite
- 22: Innenseite
- 23: Stufe
- 24: Stufe
- 25: Schlitzwand
- 26: Längsschlitz
- 27: Oberfläche
28 Rückstellelement
29 Stützfläche
30 Gegenfläche
31 Gegenfläche
32 Klemmfläche
33 Klemmfläche
34 Kantenschutzprofil
35 Abstandhalter
36 Profilschenkel
37 Profilschenkel
38 Profilsteg
39 Fuß
α Winkel
β Winkel
A Schraubenachse
E Hauptebene
F Rückstellkraft
H Hochachse
L Längsachse
S Ebene
X, Y, Z kartesische Raumachsen

## Patentansprüche

1. Haltevorrichtung für ein Flächenelement (2) einer Brüstung oder eines Geländers mit
einer Halteschiene (3), die sich entlang einer Längsachse (L) erstreckt und einen ersten Halteschenkel (4), einen zweiten Halteschenkel (5) sowie einen die beiden Halteschenkel (4, 5) miteinander verbindenden Haltesteg (6) aufweist, wobei die beiden Halteschenkel (4, 5) beidseits einer Hochachse (H) von dem Haltesteg (6) abragen und zwischen sich einen Aufnahmeschlitz (10) zur Aufnahme eines Fußabschnitts (11) des Flächenelementes (2) begrenzen, und wobei die beiden Halteschenkel (4, 5) Stützflächen (29) aufweisen, die jeweils eine die Hochachse (H) unter einem Winkel (β₄, β₅) schneidende Ebene (S₄, S₅) aufspannen,
mehreren Klemmelementen (13, 14), wobei jedem der beiden Halteschenkel (4, 5) zumindest ein Klemmelement (13, 14) der mehreren Klemmelemente (13, 14) zugeordnet ist, das mit einer dem jeweiligen Halteschenkel (4, 5) zugewandten Gegenfläche (30, 31) in Anlage mit der Stützfläche (29) des jeweiligen Halteschenkels (4, 5) ist, wobei die Klemmelemente (13, 14) an von den Gegenflächen (30, 31) abgewandten Außenseiten Klemmflächen (32, 33) aufweisen, zwischen denen der Fußabschnitt (11) des Flächenelementes (2) einspannbar ist,
mehreren Schrauben (16) zur Verstellung der Klemmelemente (13, 14) relativ zu den beiden Halteschenkeln (4, 5) entlang der Hochachse (H), wobei sich die Schrauben (16) durch in den Klemmelementen (13, 14) ausgebildete Durchgangsbohrungen (15) hindurch erstrecken, wobei jede der Schrauben (16) sich mit einem Schraubenkopf (17) an einer vom Haltesteg (6) abgewandten Vorderseite des jeweiligen Klemmelementes (13, 14) abstützt und mit einem Gewindeabschnitt (19) aus einer dem Haltesteg (6) zugewandten Unterseite (20) des jeweiligen Klemmelementes (13, 14) herausragt,
**dadurch gekennzeichnet,**
**dass** die herausragenden Gewindeabschnitte (19) der Schrauben (16) zumindest abschnittsweise in die Halteschenkel (4, 5) der Haltschiene (3) eingeschraubt sind.

2. Haltevorrichtung nach Anspruch 1, **dadurch gekennzeichnet,**
**dass** die Halteschenkel (4, 5) an einander zugewandten Innenseiten (21, 22) jeweils eine Stufe (23, 24) aufweisen, in die die herausragenden Gewindeabschnitte (19) der Schrauben (16) zumindest abschnittsweise eingeschraubt sind

3. Haltevorrichtung nach Anspruch 2, **dadurch gekennzeichnet,**
**dass** in den Stufen (23, 24) Längsschlitze (26) ausgebildet sind, in die die herausragenden Gewindeabschnitte (19) der Schrauben (16) zumindest abschnittsweise eingeschraubt sind, wobei die Längsschlitze (26) sich entlang der Längsachse (L) erstrecken und jeweils an gegenüberliegenden Schlitzwänden (25) parallel zur Längsachse (L) ausgebildete Rillen zur formschlüssigen Aufnahme der Schrauben (16) aufweisen.

4. Haltevorrichtung nach Anspruch 2 oder 3, **dadurch gekennzeichnet,**
**dass** in den Stufen (23, 24) Gewindebohrungen ausgebildet sind, in die die herausragenden Gewindeabschnitte (19) der Schrauben (16) zumindest abschnittsweise eingeschraubt sind.

5. Haltevorrichtung nach einem der Ansprüche 2 bis 4, **dadurch gekennzeichnet, dass** bezogen auf die Hochachse (H) zwischen den Klemmelementen (13, 14) und den Stufen (23, 24) Rückstellelemente (28) angeordnet sind, wobei sich die Rückstellelemente (28) an den Stufen (23, 24) abstützen und die Klemmelemente (13, 14) in einer Richtung weg vom Haltesteg (6) mit einer Rückstellkraft (F) beaufschlagen.

6. Haltevorrichtung nach Anspruch 5, **dadurch gekennzeichnet,**
**dass** die Rückstellelemente (28) streifenförmig ausgebildet sind und sich entlang der Längsachse (L) der Halteschiene (3) erstrecken.

7. Haltevorrichtung nach Anspruch 5 oder 6, **dadurch gekennzeichnet,**
**dass** die Rückstellelemente (28) aus einem geschäumten Material sind.

8. Haltevorrichtung nach einem der Ansprüche 5 bis 7, **dadurch gekennzeichnet, dass** die Rückstellelemente (28) Federn aufweisen.

9. Haltevorrichtung nach einem der Ansprüche 1 bis 8, **dadurch gekennzeichnet, dass** der zwischen der von der jeweiligen Stützfläche (29) aufgespannten Ebene (S₄, S₅) und der Hochachse (H) gebildete Winkel (β₄, β₅) sich in einer Richtung weg vom Haltesteg (6) öffnet.

10. Haltevorrichtung nach einem der Ansprüche 1 bis 9, **dadurch gekennzeichnet, dass** die Klemmelemente (13, 14) leistenartig ausgebildet sind und eine Haupterstreckungsrichtung aufweisen, die sich parallel zur Längsachse (L) der Halteschiene (3) erstreckt.

11. Haltevorrichtung nach einem der Ansprüche 1 bis 10, **dadurch gekennzeichnet,**
**dass** die Klemmelemente (13, 14) jeweils zumindest zwei der Durchgangsbohrungen (15) aufweisen, durch die sich jeweils eine der Schrauben (16) erstreckt.

12. Haltevorrichtung nach einem der Ansprüche 1 bis 11, **dadurch gekennzeichnet,**
**dass** Schraubachsen (A) der Schrauben (16) parallel zur Hochachse (H) ausgerichtet sind.

13. Haltevorrichtung nach einem der Ansprüche 1 bis 12, **dadurch gekennzeichnet,**
**dass** in dem Aufnahmeschlitz (10) der Halteschiene (3) ein Abstandhalter (35) zur Abstützung des Flächenelementes (2) gegenüber dem Haltesteg (6) angeordnet ist.

14. Haltevorrichtung nach Anspruch 13, **dadurch gekennzeichnet,**
**dass** der Abstandhalter (35) zwei Füße (39) aufweist, über die sich der Abstandhalter (35) am Haltesteg (6) abstützt.

15. Haltevorrichtung nach einem der Ansprüche 1 bis 14, **dadurch gekennzeichnet,**
**dass** die Halteschiene (3) ein einteiliger Profilkörper ist, bei dem die beiden Halteschenkel (4, 5) an dem Haltesteg (6) angeformt sind.

## Claims

1. Retaining device for a surface element (2) of a balustrade or a railing having a retaining rail (3), which extends along a longitudinal axis (L) and has a first retaining limb (4), a second retaining limb (5) and a retaining web (6) connecting the two retaining limbs (4, 5) to one another, wherein the two retaining limbs (4, 5) project from the retaining web (6) on both sides of an upright axis (H) and define between them a receiving slot (10) for receiving a foot portion (11) of the surface element (2), and wherein the two retaining limbs (4, 5) have supporting surfaces (29), which each span a plane (S4, S5) intersecting the upright axis (H) at an angle (β₄, β₅),
a plurality of clamping elements (13, 14), wherein each of the two retaining limbs (4, 5) is assigned with at least one clamping element (13, 14) of the plurality of clamping elements (13, 14) being in contact with the supporting surface (29) of the respective retaining limb (4, 5) with a mating surface (30, 31) facing the respective retaining limb (4, 5), wherein the clamping elements (13, 14) have on outer sides facing away from the mating surfaces (30, 31) clamping surfaces (32, 33), between which the foot portion (11) of the surface element (2) can be clamped,
a plurality of screws (16) for adjusting the clamping elements (13, 14) relative to the two retaining limbs (4, 5) along the upright axis (H), wherein the screws extend through through-holes (15) formed in the clamping elements (13, 14), wherein each of the screws (16) takes support with a screw head (17) on a front side of the respective clamping element (13, 14) facing away from the retaining web (6) and protrudes with a threaded portion (19) from an underside (20) of the respective clamping element (13, 14) facing the retaining web (6),
**characterized in**
**that** the protruding threaded portions (19) of the screws (16) are screwed at least in sections into the retaining limbs (4, 5) of the retaining rail (3).

2. Retaining device according to claim 1, **characterized in that** the retaining limbs (4, 5) each have on inner sides (21, 22) facing one another a step (23, 24) into which the protruding threaded portions (19) of the screws (16) are screwed at least in sections.

3. Retaining device according to claim 2, **characterized in**
**that** longitudinal slots (26) are formed in the steps (23, 24), into which the protruding threaded portions (19) of the screws (16) are screwed at least in sections, wherein the longitudinal slots (26) extend along the longitudinal axis (L) and each have grooves formed on opposite slot walls (25) parallel to the longitudinal axis (L) for receiving the screws (16) in a form-fitting manner.

4. Retaining device according to claim 2 or 3, **characterized in**
**that** threaded bores are formed in the steps (23, 24), into which the protruding threaded portions (19) of the screws (16) are screwed at least in sections.

5. Retaining device according to one of claims 2 to 4, **characterized in**
**that**, with respect to the upright axis (H), return elements (28) are arranged between the clamping elements (13, 14) and the steps (23, 24), wherein the return elements (28) take support on the steps (23, 24) and apply a returning force (F) to the clamping elements (13, 14) in a direction away from the retaining web (6).

6. Retaining device according to claim 5, **characterized in**
**that** the return elements (28) are strip-shaped and extend along the longitudinal axis (L) of the retaining rail (3).

7. Retaining device according to claim 5 or 6, **characterized in**
**that** the return elements (28) are made of a foamed material.

8. Retaining device according to one of the claims 5 to 7, **characterized in that** the return elements (28) comprise springs.

9. Retaining device according to one of claims 1 to 8, **characterized in**
**that** the angle (β₄, β₅) defined between the plane (S4, S5) spanned by the respective support surface (29) and the upright axis (H) opens in a direction away from the retaining web (6).

10. Retaining device according to one of claims 1 to 9, **characterized in**
**that** the clamping elements (13, 14) are ledge-shaped and have a main direction of extension which extends parallel to the longitudinal axis (L) of the retaining rail (3).

11. Retaining device according to one of claims 1 to 10, **characterized in**
**that** the clamping elements (13, 14) each have at least two of the through-holes (15) through each of which one of the screws (16) extends.

12. Retaining device according to one of claims 1 to 11, **characterized in**
**that** screw axes (A) of the screws (16) are aligned parallel to the upright axis (H).

13. Retaining device according to one of the claims 1 to 12, **characterized in**
**that** a spacer (35) is arranged in the receiving slot (10) of the retaining rail (3) for supporting the surface element (2) relative to the retaining web (6).

14. Retaining device according to claim 13, **characterized in**
**that** the spacer (35) has two legs (39) by which the spacer (35) takes support on the retaining web (6).

15. Retaining device according to one of claims 1 to 14, **characterized in**
**that** the retaining rail (3) is a one-piece profiled body in which the two retaining limbs (4, 5) are integrally formed on the retaining web (6).

## Revendications

1. Dispositif de retenue pour un élément de surface (2) d'un balcon ou d'un terrain, comprenant
un rail de retenue (3) s'étendant le long d'un axe longitudinal (L) et présentant une première branche de retenue (4), une deuxième branche de retenue (5) ainsi qu'une nervure de retenue (6) reliant les deux branches de retenue (4, 5) entre elles, dans lequel les deux branches de retenue (4, 5) font saillie sur la nervure de retenue (6) de part et d'autre d'un axe vertical (H) et délimitent entre elles une fente de réception (10) destinée à recevoir une section de pied (11) de l'élément de surface (2), et dans lequel les deux branches de retenue (4, 5) présentent des surfaces d'appui (29) définissant respectivement un plan (S₄, S₅) coupant l'axe vertical (H) selon un angle (β₄, β₅),
plusieurs éléments de serrage (13, 14), dans lequel au moins un élément de serrage (13, 14) parmi la pluralité d'éléments de serrage (13, 14) est attribué à chacune des deux branches de retenue (4, 5), dont une contre-surface (30, 31) tournée vers la branche de retenue (4, 5) respective est en contact avec la surface d'appui (29) de la branche de retenue (4, 5) respective, dans lequel les éléments de serrage (13, 14) présentent des surfaces de serrage (32, 33) sur des côtés extérieurs opposés aux contre-surfaces (30, 31), entre lesquelles la section de pied (11) de l'élément de surface (2) peut être serrée,
plusieurs vis (16) pour l'ajustement des éléments de serrage (13, 14) par rapport aux deux branches de retenue (4, 5) le long de l'axe vertical (H), dans lequel les vis (16) traversent des alésages de passage (15) formés dans les éléments de serrage (13, 14), dans lequel chacune des vis (16) s'appuie avec une tête de vis (17) sur un côté avant de l'élément de serrage (13, 14) respectif, lequel est opposé à la nervure de retenue (6), et fait saillie avec une section filetée (19) hors d'un côté inférieur (20) de l'élément de serrage (13, 14) respectif, lequel est tourné vers la nervure de retenue (6),
**caractérisé en ce que**
les sections filetées saillantes (19) des vis (16) ont vissées au moins partiellement dans les branches de retenue (4, 5) du rail de retenue (3).

2. Dispositif de retenue selon la revendication 1,
**caractérisé en ce que**
les branches de retenue (4, 5) présentent respectivement un gradin (23, 24) sur des côtés intérieurs (21, 22) tournés l'un vers l'autre, dans lequel les sections filetées saillantes (19) des vis (16) sont au moins partiellement vissées.

3. Dispositif de retenue selon la revendication 2,
**caractérisé en ce que**
des fentes longitudinales (26) sont formées dans les gradins (23, 24), dans lesquelles les sections filetées saillantes (19) des vis (16) sont au moins partiellement vissées, dans lequel les fentes longitudinales (26) s'étendent le long de l'axe longitudinal (L) et présentent respectivement des cannelures formées parallèlement à l'axe longitudinal (L) sur des parois de fente (25) opposées, pour la réception des vis (16) par complémentarité de forme.

4. Dispositif de retenue selon la revendication 2 ou 3,
**caractérisé en ce que**
des alésages filetés sont formés dans les gradins (23, 24), dans lesquels les sections filetées saillantes (19) des vis (16) sont au moins partiellement vissées.

5. Dispositif de retenue selon l'une des revendications 2 à 4, **caractérisé en ce que**
des éléments de rappel (28) sont disposés entre les éléments de serrage (13, 14) et les gradins (23, 24) par rapport à l'axe vertical (H), dans lequel les éléments de rappel (28) s'appuient sur les gradins (23, 24) et appliquent une force de rappel (F) aux éléments de serrage (13, 14) dans une direction opposée à la nervure de retenue (6).

6. Dispositif de retenue selon la revendication 5,
**caractérisé en ce que**
les éléments de rappel (28) sont réalisés en forme de bandes et s'étendent le long de l'axe longitudinal (L) du rail de retenue (3).

7. Dispositif de retenue selon la revendication 5 ou 6,
**caractérisé en ce que**
les éléments de rappel (28) sont constitués d'un matériau alvéolaire.

8. Dispositif de retenue selon l'une des revendications 5 à 7, **caractérisé en ce que**
les éléments de rappel (28) présentent des ressorts.

9. Dispositif de retenue selon l'une des revendications 1 à 8, **caractérisé en ce que**
l'angle (β₄, β₅) formé entre le plan (S₄, S₅) défini par la surface d'appui (29) respective et l'axe vertical (H) s'ouvre dans une direction opposée à la nervure de retenue (6).

10. Dispositif de retenue selon l'une des revendications 1 à 9, **caractérisé en ce que**
les éléments de serrage (13, 14) sont réalisés comme des baguettes et présentent une direction d'extension principale, laquelle s'étend parallèlement à l'axe longitudinal (L) du rail de retenue (3).

11. Dispositif de retenue selon l'une des revendications 1 à 10, **caractérisé en ce que**
les éléments de serrage (13, 14) présentent respectivement au moins deux alésages de passage (15), à travers lesquels l'une des vis (16) s'étend respectivement.

12. Dispositif de retenue selon l'une des revendications 1 à 11, **caractérisé en ce que**
les axes de vis (A) des vis (16) sont orientés parallèlement à l'axe vertical (H).

13. Dispositif de retenue selon l'une des revendications 1 à 12, **caractérisé en ce que**
un espaceur (35) est disposé dans la fente de réception (10) du rail de retenue (3) pour l'appui de l'élément de surface (2) par rapport à la nervure de retenue (6).

14. Dispositif de retenue selon la revendication 13, **caractérisé en ce que**
l'espaceur (35) présente deux pieds (39), par le biais desquels l'espaceur (35) s'appuie sur la nervure de retenue (6).

15. Dispositif de retenue selon l'une des revendications 1 à 14, **caractérisé en ce que**
le rail de retenue (3) est un corps de profilé monobloc, dans lequel les deux branches de retenue (4, 5) sont formées sur la nervure de retenue (6).
